# FASCICULE DE BREVET EUROPEEN

(11) **EP 3 674 625 B1**
(45) Date de publication et mention de la délivrance du brevet: **21.04.2021**
(21) Numéro de dépôt: 19219631.9
(22) Date de dépôt: 24.12.2019
(51) Int. Cl.: F25B 9/14, F02G 1/043

(54) **DISPOSITIF DE REFROIDISSEMENT À CYCLE STIRLING AVEC MOTEUR À ROTOR EXTERNE**
KÜHLVORRICHTUNG MIT STIRLINGZYKLUS UND MOTOR MIT EXTERNEM ROTOR
STIRLING CYCLE COOLING DEVICE WITH EXTERNAL ROTOR MOTOR

(30) Priorité: 28.12.2018 FR 1874264
(43) Date de publication de la demande: 01.07.2020
(73) Titulaire: Thales, 92400 Courbevoie (FR)
(72) Inventeur: SACAU, Mikel, 31700 BLAGNAC (FR); MARTIN, Jean-Yves, 31700 BLAGNAC (FR); LE BORDAYS, Julien, 31700 BLAGNAC (FR)
(74) Mandataire: Marks & Clerk France

(56) Documents cités:
- FR-A1- 2 748 427
- JP-A- H09 170 491
- US-A- 4 365 982

## Description

L'invention concerne un dispositif de refroidissement mettant en œuvre un cycle thermodynamique de type Stirling inversé. Un tel dispositif est par exemple décrit dans le brevet US4365982. Le refroidissement est réalisé au moyen d'un fluide frigorigène circulant dans un circuit comprenant principalement un compresseur et un régénérateur utilisé comme échangeur thermique. Le compresseur comprend un piston mobile en translation dans un cylindre. Le régénérateur comprend un piston de régénération également mobile dans un second cylindre. Le régénérateur est parfois appelé : « déplaceur ». Les deux pistons sont entrainés chacun par un système bielle/manivelle actionnés tous deux par un vilebrequin. Le vilebrequin est entrainé en rotation par un moteur rotatif.

De manière connue, le cycle de Stirling inversé comprend les quatre phases suivantes:
- une compression isotherme d'un fluide à une température chaude, obtenue par le déplacement d'un piston de compression dans un cylindre de compression ;
- un refroidissement isochore du fluide, de la température chaude à une température froide, obtenu par passage du fluide à travers un piston de régénération, ledit piston étant en déplacement dans un cylindre de régénération et jouant le rôle d'échangeur thermique ;
- une détente isotherme du fluide à la température froide, obtenue par retour du piston de compression dans le cylindre de compression, et
- un réchauffement isochore du fluide, de la température froide à la température chaude, obtenu par retour du piston de régénération dans le cylindre de régénération.

De manière classique, le piston de régénération et le piston de compression sont entraînés par le vilebrequin, par l'intermédiaire d'une bielle articulée d'une part sur un maneton et d'autre part sur le piston considéré.

Il est courant d'utiliser un moteur électrique à rotor interne pour entrainer le vilebrequin. Ce type de moteur est généralement composé d'un stator externe et d'un rotor interne. Plus précisément, le stator possède des enroulements assemblés en forme d'un tube générant un champ magnétique tournant à l'intérieur du tube. Le rotor peut posséder des aimants permanents ou des enroulements. Le rotor est disposé à l'intérieur du stator et tourne en s'accrochant au champ magnétique généré par le stator.

Lors des phases de compression et de dépression, le déplacement alternatif des pistons dans leur cylindre respectif génère des efforts axiaux alternatifs et potentiellement déphasés. Au travers des systèmes bielle/manivelle, les efforts exercés par les pistons se traduisent par un couple résistant variable au niveau de la motorisation. Plus précisément, ce couple présente de fortes variations d'amplitude entre une valeur proche de zéro et une valeur maximale atteinte deux fois par tour.

Le pilotage du moteur électrique permet de s'adapter à ces variations de couple mais entraine des pertes de rendement électrique, aussi bien pour le moteur lui-même que pour le dispositif électronique qui le pilote. Les variations de couple entrainent des variations de tension et de courant dans l'alimentation électrique du moteur pouvant être à l'origine de perturbations électromagnétiques.

De plus, les variations de couple entrainent des oscillations de la vitesse angulaire du moteur et du vilebrequin. Ces oscillations de vitesse génèrent des vibrations pouvant dégrader la signature acoustique du dispositif de refroidissement et potentiellement une fatigue mécanique accélérée des différents composants du dispositif.

Il est possible de limiter l'impact de ces variations de couple résistant au niveau de la motorisation à l'aide d'un volant d'inertie ajouté sur l'arbre moteur. Cependant, l'ajout de ce type de pièce mobile entraine une augmentation du volume, de la masse et du coût du dispositif de refroidissement.

L'invention vise à pallier tout ou partie des problèmes cités précédemment en mettant en œuvre une motorisation à rotor externe. La motorisation à rotor externe présente par construction un moment d'inertie autour de son axe de rotation plus important qu'une configuration à rotor interne. Il est alors envisageable dans ce cas de pouvoir se passer d'un volant d'inertie.

Par ailleurs, pour un volume et un rendement donnés, un moteur à rotor externe peut générer un couple supérieur à celui d'un moteur à rotor interne. De même, pour un couple donné, l'utilisation d'un moteur à rotor externe permet donc de faciliter la miniaturisation du dispositif de refroidissement.

Enfin, dans un moteur à rotor à aimants permanents, les aimants sont disposés au plus près du stator. Un moteur à rotor interne présente un risque de décollement des aimants lors de la rotation du moteur du fait de la force centrifuge tendant à arracher les aimants de leur support. Au contraire, dans un moteur à rotor externe comprenant des aimants, ceux-ci tendent à être plaqués au fond de leur logement évitant ainsi la mise en œuvre de moyens spécifiques de maintien des aimants tels que des bagues spécifiques de maintien des aimants. Dans un moteur à rotor interne, de tels moyens de maintien tendent aussi à augmenter l'entrefer entre le rotor et le stator, ce qui entraine une perte de rendement du moteur.

A cet effet, l'invention a pour objet un dispositif de refroidissement à cycle Stirling comprenant un compresseur à piston alternatif entrainé par un moteur électrique rotatif autour d'un axe par l'intermédiaire d'un vilebrequin dans lequel le moteur électrique comprend un stator interne et un rotor externe et dans lequel le stator interne est connecté au vilebrequin par l'intermédiaire d'une liaison à au moins un degré de liberté en rotation autour de l'axe du moteur électrique.

Avantageusement, le stator interne possède une forme cylindrique pleine s'étendant selon l'axe du moteur électrique.

Avantageusement, le stator possède une forme cylindrique comprenant une ouverture axiale et s'étendant selon l'axe et dans laquelle un arbre moteur solidaire du rotor externe peut tourner.

L'ouverture axiale peut traverser partiellement ou complètement le stator.

Le rotor externe est avantageusement solidaire d'un arbre moteur porté par la liaison à au moins un degré de liberté en rotation et la liaison à au moins un degré de liberté en rotation est réalisée en deux parties chacune disposée d'un côté du moteur le long de l'axe.

Chacune des parties est par exemple formée d'un roulement.

Un boitier du dispositif comprend avantageusement une portée tubulaire s'étendant suivant l'axe en traversant partiellement ou complètement le stator qui est fixé sur l'extérieur de la portée tubulaire. L'arbre moteur s'étend à l'intérieur de la portée tubulaire et la liaison à au moins un degré de liberté en rotation connecte l'intérieur de la portée tubulaire et l'arbre moteur.

Le dispositif comprend avantageusement un corps monobloc solidaire du stator. La liaison à au moins un degré de liberté en rotation selon l'axe connecte le corps monobloc et un arbre moteur solidaire du rotor et le piston du compresseur se déplace dans un cylindre formé dans le corps monobloc.

Le corps comprend avantageusement la portée tubulaire.

Avantageusement, seule la liaison à au moins un degré de liberté en rotation selon l'axe connecte le corps et l'arbre moteur. De plus, la liaison à au moins un degré de liberté en rotation selon l'axe connecte sans intermédiaire le corps et l'arbre moteur.

Le rotor est solidaire d'un arbre moteur comprenant avantageusement une portée s'étendant le long de l'axe et solidaire du vilebrequin, un segment de tube à l'intérieur duquel est fixé le rotor et un voile reliant le segment de tube et la portée.

Le moteur est avantageusement disposé entre le corps et le voile.

La liaison cinématique à au moins un degré de liberté en rotation selon l'axe comprend une liaison ou un ensemble de liaison parmi :
- Une liaison pivot ;
- Une liaison pivot glissant ;
- Une liaison linéaire annulaire et une liaison rotule associées en parallèle ,
- Deux liaisons rotule associées en parallèle ;
- Une liaison rotule et une liaison linéaire rectiligne (36) associées en parallèle ;
- Une liaison pivot glissant et une liaison ponctuelle (40) associées en parallèle ;
- Une liaison linéaire annulaire et une liaison appui plan associées en parallèle.

L'invention sera mieux comprise et d'autres avantages apparaîtront à la lecture de la description détaillée de modes de réalisation donnés à titre d'exemple, description illustrée par le dessin joint dans lequel :
les figures 1a à 1h représentent un premier mode de réalisation d'un moteur à rotor externe et différents exemples de liaisons cinématiques pouvant être utilisées pour connecter le moteur au boitier d'un dispositif de réfrigération à cycle Stirling ;
les figures 2a à 2h représentent un second mode de réalisation d'un moteur à rotor externe et différents exemples de liaisons cinématiques ;
le figure 3 représente une variante de réalisation de la fonction motorisation du dispositif de réfrigération mettant en œuvre le premier mode de réalisation de moteur à rotor externe ;
la figure 4 représente une première variante de réalisation de la fonction motorisation mettant en œuvre le second mode de réalisation de moteur à rotor externe ;
la figure 5 représente une deuxième variante de réalisation de la fonction motorisation mettant en œuvre le second mode de réalisation de moteur à rotor externe ;
la figure 6 représente une troisième variante de réalisation de la fonction motorisation mettant en œuvre le second mode de réalisation de moteur à rotor externe ;
la figure 7 représente une quatrième variante de réalisation de la fonction motorisation mettant en œuvre le second mode de réalisation de moteur à rotor externe ;
la figure 8 représente une cinquième variante de réalisation de la fonction motorisation mettant en œuvre le second mode de réalisation de moteur à rotor externe ;
la figure 9 représente une sixième variante de réalisation de la fonction motorisation mettant en œuvre le second mode de réalisation de moteur à rotor externe ;
la figure 10 représente une autre vue de la sixième variante de réalisation.

Par souci de clarté, les mêmes éléments porteront les mêmes repères dans les différentes figures.

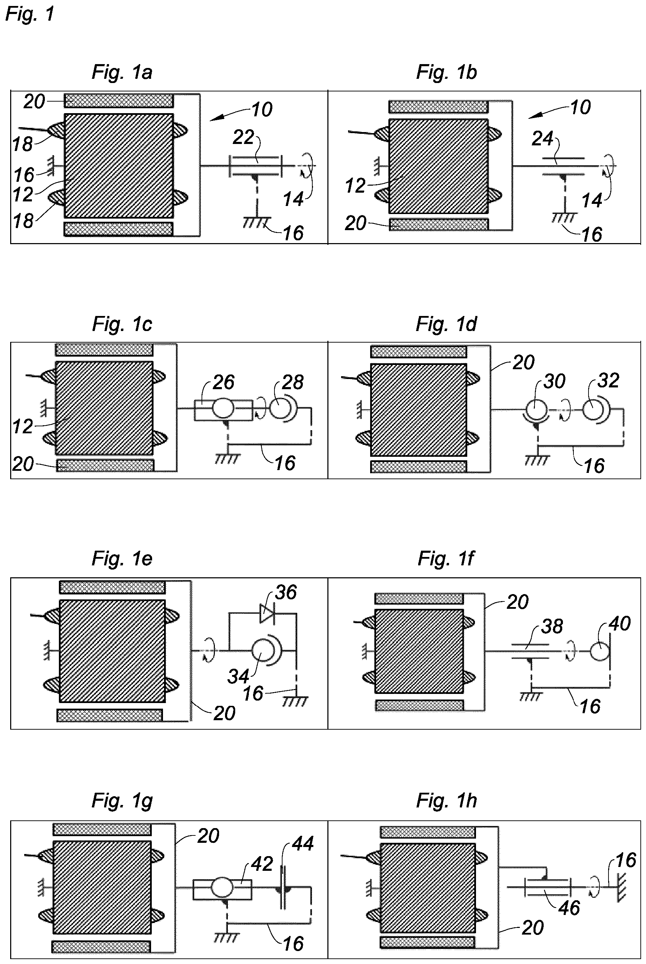

Sur les figures 1a à 1h, un moteur 10 à rotor externe est représenté. Le moteur 10 comprend un stator 12 possédant une forme cylindrique pleine s'étendant selon un axe 14 formant l'axe de rotation du moteur 10. Le stator 12 est fixe par rapport à un boitier 16 du dispositif de réfrigération. Le stator comprend par exemple des enroulements 18 permettant de générer un champ magnétique tournant s'étendant radialement par rapport à l'axe 14 en périphérie du stator 12.

Le moteur 10 comprend un rotor 20 réalisé sous forme tubulaire de révolution autour de l'axe 14. Le rotor 20 est disposé radialement autour du stator 12. Le rotor 20 peut comprendre des enroulements ou des aimants permanents destinés à s'accrocher au champ magnétique généré par les enroulements statoriques. L'utilisation d'aimants permanents permet d'éviter la mise en œuvre de contacts tournants, tels que des balais ou des charbons, permettant d'alimenter les enroulements rotoriques.

Les figures 1a à 1h représentent plusieurs exemples de liaisons cinématiques permettant de connecter le rotor 20 au boitier 16. Les différents arrangements présentés pour définir les liaisons cinématiques autorisent tous au moins un degré de liberté en rotation autour de l'axe 14. Les figures représentées ne constituent pas une liste exhaustive des liaisons possibles. Les liaisons possibles sont caractérisées par toutes les liaisons cinématiques offrant au moins un degré de liberté en rotation selon l'axe 14. Sur la figure 1a, une liaison pivot 22 d'axe 14 relie le rotor 20 au boitier 16. Sur la figure 1b, une liaison pivot glissant 24 d'axe 14 relie le rotor 20 au boitier 16. La liaison pivot glissant 24 présente un degré de liberté supplémentaire en translation selon l'axe 14. Pour le fonctionnement du moteur 10, il est nécessaire de bloquer la translation possible du rotor 20 par rapport au boitier 16. Cette translation peut être bloquée dans le compresseur du dispositif de réfrigération. Le fait de conserver, au niveau du moteur 10 une translation selon l'axe 14 permet d'éviter un hyperstatisme le long de cet axe de rotation. Il est ainsi possible de relâcher les tolérances de fabrication du moteur 10.

La figure 1c représente l'association d'une liaison linéaire annulaire 26 et d'une liaison rotule 28 pour relier le rotor 20 au boitier 16. Le degré de liberté en translation de la liaison linéaire annulaire 26 est suivant l'axe 14. Ce degré de liberté est supprimé par la liaison rotule 28.

La figure 1d représente l'association des deux liaisons rotule 30 et 32 pour relier le rotor 20 au boitier 16. Les deux liaisons rotule 30 et 32 sont associées en parallèle et les centres de rotation des deux liaisons rotule 30 et 32 sont disposés à distance l'un de l'autre et alignés le long de l'axe 14. Dans cette association, la translation selon l'axe 14 est bloquée deux fois, une fois par chaque liaison rotule. Bien que de façon générale, l'hyperstatisme impose des tolérances serrées, l'hyperstatisme de cette association peut présenter un intérêt pour rigidifier la liaison entre le rotor 20 et le boitier 16.

La figure 1e représente une liaison rotule 34 et une liaison linéaire rectiligne 36 associées en parallèle pour relier le rotor 20 au boitier 16. La liaison linéaire rectiligne 36 bloque la translation selon l'axe 14 et la rotation autour des deux autres axes perpendiculaires à l'axe 14 formant un trièdre. Le degré de liberté en rotation autour de l'axe 14 reste libre.

La figure 1f représente une liaison pivot glissant 38 et une liaison ponctuelle 40 toujours associées en parallèle pour relier le rotor 20 au boitier 16. La liaison ponctuelle 40 arrête la translation du rotor 20 selon l'axe 14.

La figure 1g représente une liaison linéaire annulaire 42 et une liaison appui plan 44 associées en parallèle pour relier le rotor 20 au boitier 16. La liaison linéaire annulaire 42 est semblable à la liaison 24 de la figure 1c et son degré de liberté en translation est suivant l'axe 14. La liaison appui plan 44 arrête la translation selon l'axe 14 et permet une rotation autour de l'axe 14.

La figure 1h représente une liaison pivot 46 reliant le rotor 20 au boitier 16. Cette liaison pivot présente le même degré de liberté en rotation autour de l'axe 14 que la liaison 22 de la figure 1a. Dans la liaison 22, la partie centrale de la liaison pivot est connectée au rotor 20. Par contre dans la liaison 46, la partie centrale de la liaison pivot est connectée au boitier 16. Cette différence de représentation préfigure des modes de mise en œuvre différents pour ces deux liaisons pivot. Pour mettre en œuvre un dispositif tel que schématisé sur la figure 1a, le rotor 20 est solidaire d'un arbre tournant à l'intérieur du boitier 16 alors que dans un dispositif schématisé sur la figure 1h, le boitier 16 comprend un arbre fixe autour duquel tourne le rotor 20.

Sur les figures 1c à 1g, le rotor 20 et le boitier 16 sont connectées au moyen de deux liaisons cinématiques. Sur chacune de ces figures, les deux liaisons sont représentées du même côté du moteur 10. Dans la pratique, la mise en œuvre de ces deux liaisons peut se faire du même côté du moteur 10 mais aussi une liaison de chaque côté du moteur. En disposant les moyens de mise en œuvre de chaque liaison de part et d'autre du moteur 10, les charges supportées par chacune des deux liaisons sont mieux réparties. En d'autres termes, le porte à faux du rotor 20 est réduit.

Il est tout à fait envisageable de mettre en œuvre l'invention avec d'autres configurations de liaisons qui n'auraient pas été présentées précédemment sur les figures 1a à 1h. L'état cinématique de la liaison entre le rotor 20 et le boitier 16 est à analyser en fonction d'autres liens existants dans le dispositif de réfrigération pris dans son ensemble et notamment dans la partie compresseur non représentée sur les figures 1a à 1h.

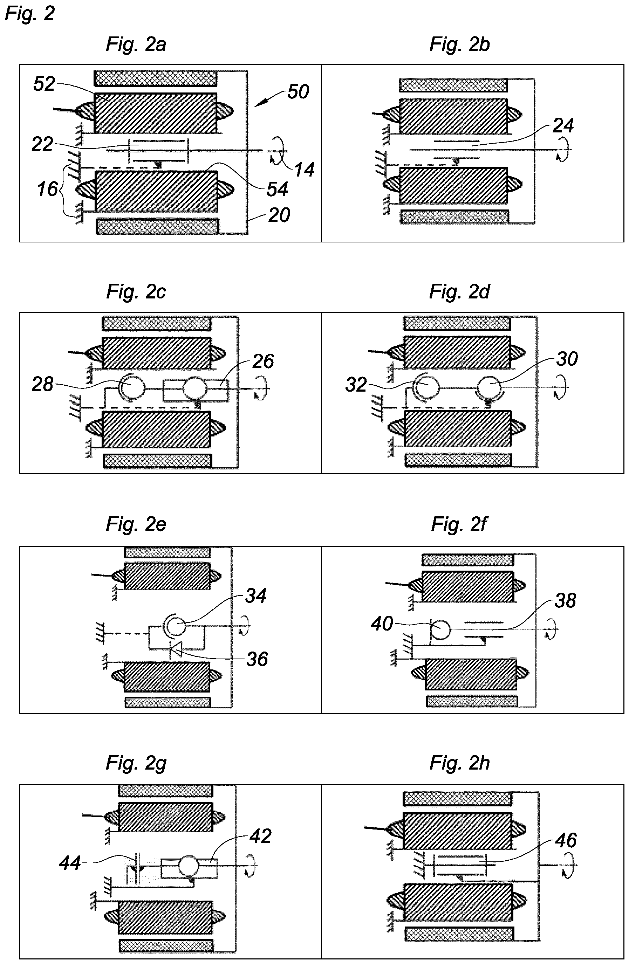

Les figures 2a à 2h représentent une autre architecture du moteur 50 à rotor externe. Le stator 52 du moteur 50 diffère du stator 12, en ce qu'il possède une forme cylindrique ouverte selon l'axe de rotation 14 du moteur. Le rotor du moteur 50 est semblable à celui du moteur 10 et reprend donc le repère 20. L'ouverture axiale 54 du stator 52 permet notamment d'y faire passer l'arbre moteur solidaire du rotor 20. Les figures 2a à 2h reprennent les mêmes liaisons cinématiques que celles représentées sur les figures 1a à 1h. Sur les figures 2a à 2h, les différentes liaisons cinématiques sont représentées à l'intérieur de l'ouverture axiale 54. Comme précédemment, les figures 2a à 2h ne constituent pas une liste exhaustive des liaisons possibles. Les liaisons possibles sont caractérisées par toutes les liaisons cinématiques offrant au moins un degré de liberté en rotation selon l'axe 14.

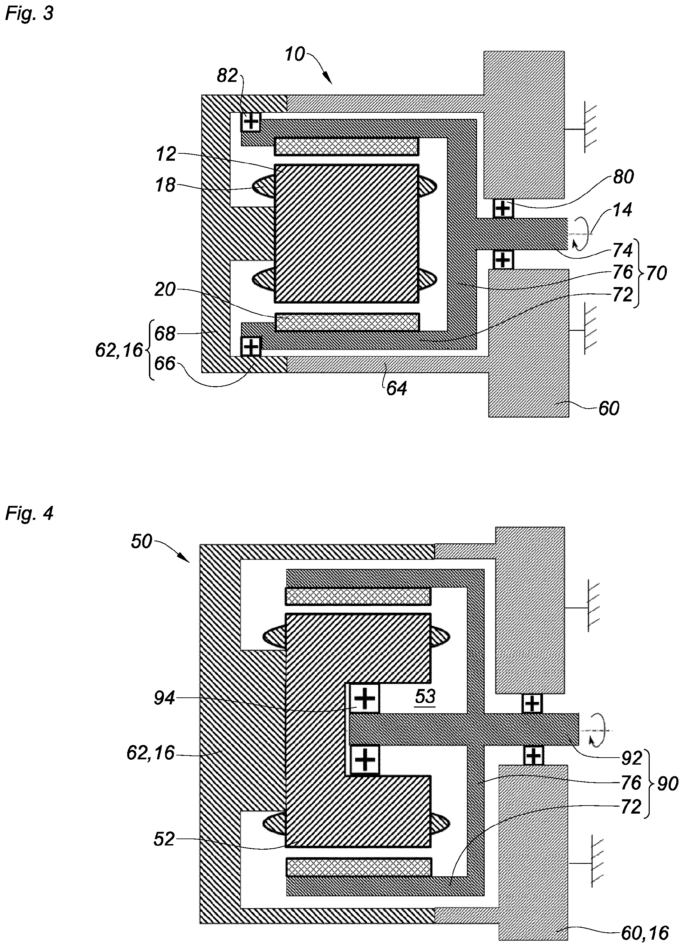

La figure 3 représente un premier mode de réalisation d'un dispositif de réfrigération selon l'invention. Le dispositif comprend le moteur à rotor externe 10 dont le stator 12 possède une forme cylindrique pleine. Le boitier 16 du dispositif est réalisé en plusieurs pièces mécaniques appartenant à la même classe d'équivalence. Autrement dit, les différentes pièces du boitier 16 ne possèdent aucun degré de liberté entre elles. Le boitier 16 comprend un corps 60 du compresseur (non représenté) et un couvercle 62 fixé au corps 60. Le boitier 16 forme une enveloppe du moteur 10. Le moteur 10 présente une forme globalement cylindrique autour de l'axe 14. Le corps 60 comprend une section tubulaire 64 d'axe 14 à l'intérieur de laquelle le moteur 10 est inséré. Le couvercle 62 comprend également un partie tubulaire 66 s'étendant dans le prolongement de la section tubulaire 64 et fixé à celle-ci. Le couvercle 62 comprend un flanc 68 s'étendant perpendiculairement à l'axe 14. Le flanc 68 referme la partie tubulaire 66. En pratique, la section tubulaire 64 peut s'étendre jusqu'au flanc 68. Dans ce cas, la partie tubulaire 66 disparait. Inversement, la section tubulaire 64 peut disparaitre et la partie tubulaire 66 s'étend alors jusqu'à la partie du corps 60 configurée pour soutenir le compresseur. De façon plus générale, le corps 60 et le couvercle 62 forment une enveloppe du moteur 10. De cette enveloppe sort l'arbre moteur 70 tournant autour de l'axe 14.

Le stator 12 est assemblé sur le boitier 16 et plus précisément sur le couvercle 62 dans l'exemple de la figure 3.

L'arbre moteur 70 est solidaire du rotor 20. Plus précisément, l'arbre moteur 70 comprend un tube 72 à l'intérieur duquel le rotor 20 est fixé. L'arbre moteur 70 comprend également une portée 74 s'étendant suivant l'axe 14, solidaire du vilebrequin (non représenté) et un voile 76 reliant la portée 74 et le tube 72. Le voile 76 a la forme d'un disque centré sur l'axe 14. L'arbre moteur 70 permet d'augmenter le moment d'inertie de la partie tournante du dispositif. Plus précisément, l'inertie de l'arbre moteur 70 est principalement due à la présence du tube 72. En effet, l'inertie de la partie tournante du moteur 10 est d'autant plus importante qu'elle comprend de la masse à distance à l'axe 14. Ainsi, le tube 72 assure deux fonctions : le maintien mécanique du rotor 20 et une part importante de l'inertie de la partie tournante du moteur 10. Une autre part importante de l'inertie est assurée par le rotor 20. L'inertie d'un tel montage est beaucoup plus importante que celle d'un moteur à rotor interne où l'essentiel de la masse de la partie tournante du moteur est concentré au voisinage immédiat de son axe de rotation.

La liaison cinématique entre le boitier 16 et le rotor 20 est assurée par deux roulements 80 et 82. Le roulement 80 est disposé entre la portée 74 de l'arbre moteur 70 et le corps 60. Le roulement 82 est disposé entre le tube 72 et la partie tubulaire 66 du couvercle 62. Les roulements 80 et 82 peuvent par exemple être des roulements à bille. Certains types de roulements, lorsque les bagues sont immobilisées, peuvent être assimilés à une liaison rotule car en complément de la rotation autour de l'axe 14, ils possèdent une mobilité de rotation autour de deux axes perpendiculaires à l'axe 14. Ce montage à deux roulements à billes peut donc remplir la fonction de la liaison représentée sur la figure 1d. Il est également possible de conserver pour l'un des roulements une translation possible selon l'axe 14. Cette translation peut être réalisée en laissant libre en translation une bague de l'un des deux roulements. Avec cette mobilité en translation, le montage peut remplir la fonction de la liaison représentée sur la figure 1c.

La figure 3 représente des roulements. Il est également possible de mettre en œuvre d'autres composants assurant une mobilité en rotation autour de l'axe 14, comme par exemple des paliers lisses, des paliers magnétiques, des paliers pneumatiques ou tout autre composant assurant toute liaison cinématique possédant au moins 1 degré de liberté en rotation selon l'axe 14 comme sur les différents exemples de liaisons cinématiques représentées sur les figures 1a à 1h.

La figure 4 représente un second mode de réalisation d'un dispositif de réfrigération selon l'invention. Le dispositif comprend un moteur à rotor externe dont le stator possède une forme cylindrique en partie ouverte selon l'axe de rotation 14 du moteur. Cette forme du stator est intermédiaire entre les représentations schématiques des figures 1a à 1h d'une part et celles des figures 2a à 2h. Les repères des figures 2a à 2h sont repris pour la figure 4 : 50 pour le moteur, 52 pour le stator et 20 pour le rotor. On retrouve le boitier 16 formé du corps 60 et du couvercle 62 sur lequel est fixé le stator 52. Le moteur 50 comprend un arbre moteur 90 dans lequel on retrouve le tube 72 et le voile 76. A la différence de l'arbre moteur 70, l'arbre moteur 90 comprend une portée pleine 92 traversant partiellement l'ouverture 53 du stator 52.

On retrouve le roulement 80 entre la portée 92 et le corps 60. Sur la figure 4, un second roulement 94 est disposé entre stator 52 et la portée 92 dans le fond de l'ouverture 53. Cette variante permet de réduire les dimensions du roulement 94 par rapport à celles du roulement 82.

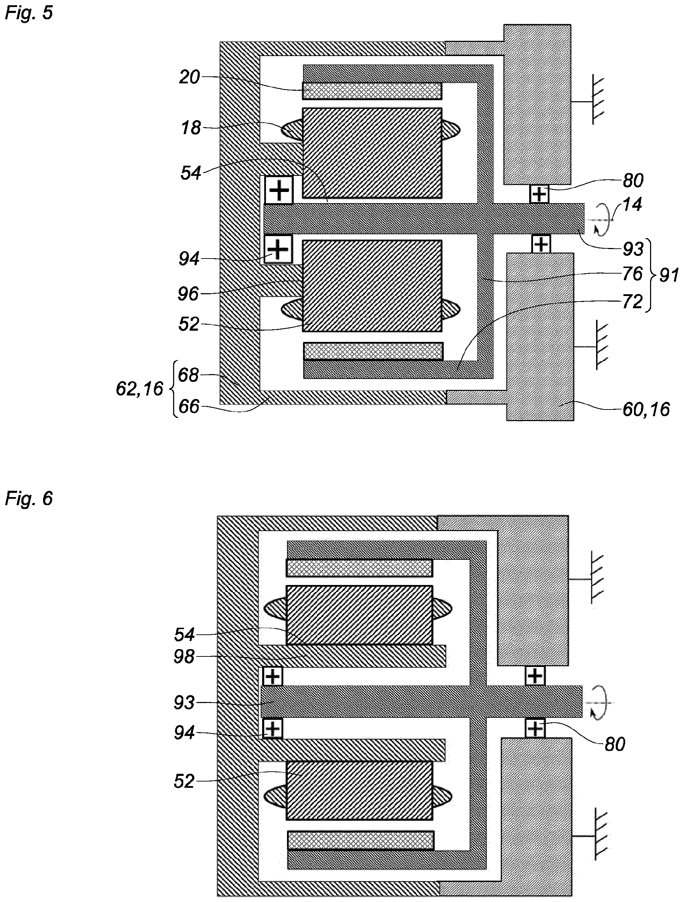

La figure 5 représente une variante de la figure 4 dans laquelle l'ouverture 54 du stator est traversante. Le moteur 50 comprend un arbre moteur 91 dans lequel on retrouve le tube 72 et le voile 76. A la différence de l'arbre moteur 90, l'arbre moteur 91 comprend une portée pleine 93 plus longue que la portée 92. La portée 93 traverse le stator 52 par son ouverture 54 et le second roulement 94 est disposé entre le couvercle 62 et la portée 93. Les roulements 80 et 94 sont disposés de part et d'autre du moteur 50 le long de l'axe 14, ce qui permet de mieux les écarter et de bien répartir les efforts radiaux exercés par le moteur 50 sur l'arbre moteur 91 et évitant le porte à faux du rotor 20. Comme sur la figure 3, les roulements 80 et 94 représentés sur les figures 4 et 5 peuvent être à billes, à rouleaux (droits ou coniques) ou à aiguilles. Il est également possible de les remplacer par des paliers ou par tout autre composant assurant au moins un degré de liberté en rotation autour de l'axe 14 et notamment les différentes liaisons cinématiques représentées sur les figures 2a à 2h.

Sur la figure 5, le stator 52 est fixé au couvercle 62 par une de ses faces latérales 96. Ce mode de fixation peut présenter des difficultés de mise en œuvre du fait de la présence des enroulements 18 pouvant gêner la fixation. La figure 6 présente une alternative en proposant de fixer le stator 52 au couvercle 62 par l'ouverture 54. Autrement dit le couvercle 62 comprend une portée tubulaire 98 s'étendant suivant l'axe 14. Le stator 52 est fixé sur l'extérieur de la portée tubulaire 98 et la portée 93 s'étend à l'intérieur de la portée tubulaire 98 jusqu'au roulement 94. Sur la figure 6, la portée tubulaire 98 traverse complètement l'ouverture 54 du stator 52. Alternativement, il est possible de réduire la longueur de la portée 98 ne la rendant que partiellement traversante.

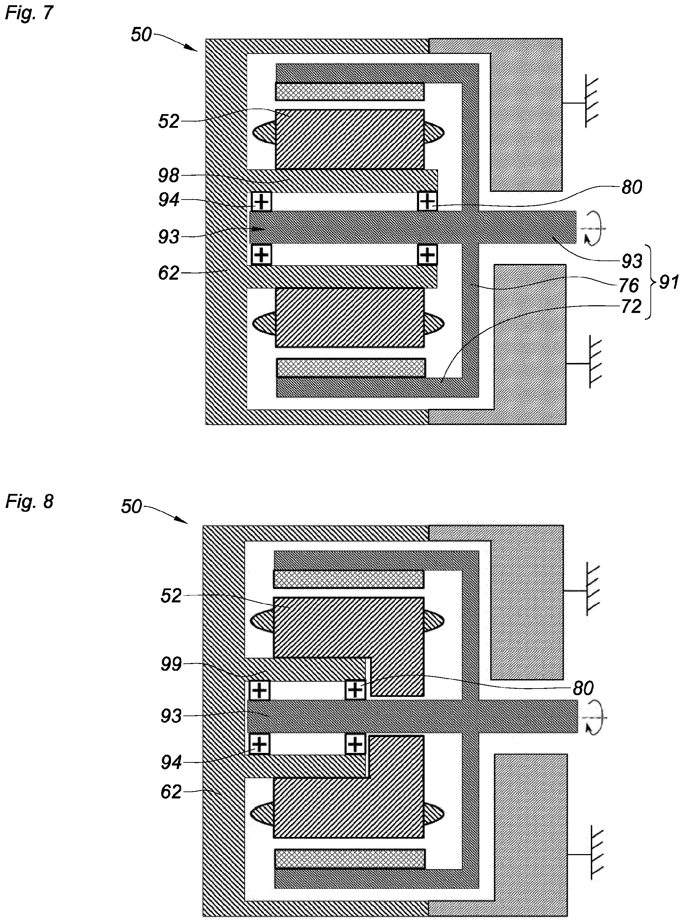

La figure 7 représente une variante de la figure 6 dans laquelle les deux roulements 80 et 94 sont tous deux disposés entre le couvercle 62 et l'arbre moteur 91 et plus précisément, entre la portée tubulaire 98 et la portée 93.

Sur la figure 7, la portée 98 traverse complètement le stator 52. La figure 8 représente une variante de la figure 7 dans laquelle le couvercle 62 comprend une portée 99 ne traversant pas complètement le stator 52. La distance axiale entre les roulements 80 et 94 est plus faible que dans la figure 7. La figure 8 présente cependant un intérêt d'augmenter le volume utile du stator 52 au voisinage de l'axe 14, ce qui peut permettre de rendre le moteur 50 plus compact.

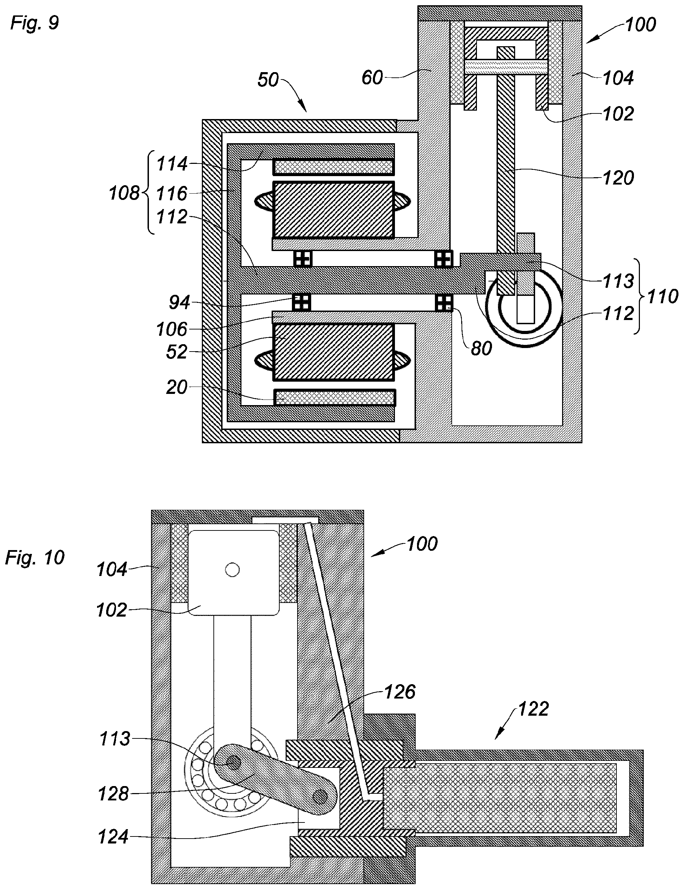

Les figures 9 et 10 représentent encore une autre variante mettant en œuvre le moteur 50 dont le stator 52 possède une forme cylindrique ouverte. La figure 9 est une vue en coupe dans un plan contenant l'axe 14 et la figure 10 est une vue en coupe dans un plan perpendiculaire à l'axe 14. Sur la figure 9, le compresseur 100 du dispositif de réfrigération est représenté. Le compresseur 100 comprend un piston 102 se déplaçant dans un cylindre 104 formé dans le corps 60. Le corps 60 est monobloc et comprend une portée tubulaire 106 s'étendant selon l'axe 14. L'arbre moteur porte ici le repère 108 et les roulements 80 et 94 sont disposés entre l'arbre moteur 108 et la portée tubulaire 106. Comme précédemment, les roulements peuvent être remplacés par d'autres composants mécaniques tels des paliers lisses. De façon plus générale, la liaison admet au moins une mobilité en rotation selon l'axe 14 et connecte sans intermédiaire le corps 60 et l'arbre moteur 108. Aucune autre liaison ne connecte le corps 60 et l'arbre moteur 108. La liaison est disposé sans intermédiaire dans la portée tubulaire 106. Le corps monobloc 60 est avantageusement réalisé sans assemblage. Dans le procédé de fabrication du corps 60, un assemblage peut être accepté à condition que le cylindre 104 ainsi que la portée tubulaire 106 recevant la liaison soient usinés après l'assemblage. Cet usinage réalisé après assemblage permet d'éviter que les tolérances de l'assemblage ne viennent se cumuler avec celle reliant le cylindre 104 et la portée tubulaire 106. En d'autres termes on entend par monobloc une pièce mécanique dont les tolérances de fabrication ne sont pas impactées par un quelconque assemblage pouvant intervenir durant son procédé de fabrication. De la même façon le fait de disposer la liaison dans le corps 60 sans intermédiaire permet de limiter les chaînes cotes entre le cylindre 104 et l'arbre moteur 108.

Dans ce mode de réalisation le couvercle 62 n'a pour fonction que de former une enveloppe du moteur 50 et ne supporte plus le stator 52. Le stator 52 est fixé sur l'extérieur de la portée tubulaire 106. Le fait de disposer les roulements 80 et 94 entre le corps et l'arbre moteur simplifie la chaîne de cote passant par le corps, l'arbre moteur, le vilebrequin 110, la bielle 120, le piston 102 pour revenir vers les corps 60. Cette chaîne de cote ne passe pas par le couvercle comme dans les modes de réalisation représentés sur les figures 4, 5 et 6 où au moins un des roulements est porté par le couvercle.

Dans ce mode de réalisation l'arbre moteur 108 comprend une portée pleine 112 s'étendant selon l'axe 14 et sur lequel sont montés les roulements 80 et 94. Le Vilebrequin 110 est formé par l'extrémité de la portée 112 et un maneton 113 solidaire de la portée 112 et s'étendant dans son prolongement. Le piston 102 est entrainé par l'arbre moteur 108 au travers du maneton 113 et d'une bielle 120. L'arbre moteur 108 comprend en outre un segment de tube 114 semblable au segment de tube 72 et portant le rotor externe 20 ainsi qu'un voile 116 reliant la portée 112 et le segment de tube 114. Le voile 116 a la forme d'un disque centré sur l'axe 14. Dans les modes de réalisation des figures 3 à 8, le voile 76 est situé entre le corps 60 et le moteur 10 ou 50. Cette disposition du voile éloigne le moteur du compresseur, ce qui augmente la longueur de la portée. Contrairement à cela, dans le mode de réalisation de la figure 9, le voile 116 n'est pas disposé entre le moteur 50 et le corps. Autrement, dit le moteur 50 est disposé entre le corps et le voile 116, ce qui permet de rapprocher le moteur 50 du compresseur 100.

Sur la figure 10 apparait le régénérateur 122 du dispositif de refroidissement. Le régénérateur comprend un piston de régénération 124 se déplaçant dans un cylindre 126 également formé dans le corps monobloc 60. Le piston de régénération 124 est entrainé par l'arbre moteur 108 au travers du maneton 113 et d'une bielle 128. Le vilebrequin 110 peut comprendre un seul maneton 113 comme représenté sur les figures 9 et 10. Alternativement, le vilebrequin 110 peut comprendre deux manetons, chacun entrainant une des bielles 120 et 128. Alternativement, les deux bielles 120 et 128 peuvent se situer dans un même plan unique.

Sur la figure 10, l'axe de déplacement du piston de régénération 124 est perpendiculaire à l'axe de déplacement du piston 102 du compresseur 100. Il est également possible de réaliser un dispositif de refroidissement selon l'invention avec d'autres orientations relatives des deux axes.

## Revendications

1. Dispositif de refroidissement à cycle Stirling comprenant un compresseur (100) à piston (102) alternatif entrainé par un moteur électrique rotatif (10 ; 50) autour d'un axe (14) par l'intermédiaire d'un vilebrequin (110), **caractérisé en ce que** le moteur électrique (10 ; 50) comprend un stator interne (12 ; 52) et un rotor externe (20) et **en ce que** le stator interne (12 ; 52) est connecté au vilebrequin (110) par l'intermédiaire d'une liaison à au moins un degré de liberté en rotation (22 ; 24 ; 26, 28 ; 30, 32 ; 34, 36 ; 38, 40 ; 42, 44 ; 46) autour de l'axe (14) du moteur électrique (10 ; 50).

2. Dispositif selon la revendication 1, **caractérisé en ce que** le stator interne (12) possède une forme cylindrique pleine s'étendant selon l'axe (14) du moteur électrique (10).

3. Dispositif selon la revendication 1, **caractérisé en ce que** le stator (52) possède une forme cylindrique comprenant une ouverture axiale (53 ; 54) et s'étendant selon l'axe (14) et dans laquelle un arbre moteur (90) solidaire du rotor externe (20) peut tourner.

4. Dispositif selon la revendication 3, **caractérisé en ce que** l'ouverture axiale (53 ; 54) traverse partiellement ou complètement le stator (52).

5. Dispositif selon la revendication 4, **caractérisé en ce que** le rotor externe (20) est solidaire d'un arbre moteur (90 ; 91 ; 108) porté par la liaison à au moins un degré de liberté en rotation et **en ce que** la liaison à au moins un degré de liberté en rotation est réalisée en deux parties (26, 28 ; 30, 32 ; 34, 36 ; 38, 40 ; 42, 44) chacune disposée d'un côté du moteur (50) le long de l'axe (14).

6. Dispositif selon la revendication 5, **caractérisé en ce que** chacune des parties est formée d'un roulement (80, 94).

7. Dispositif selon l'une des revendications précédentes, **caractérisé en ce qu'**un boitier (16) du dispositif comprend une portée tubulaire (98 ; 99 ; 106) s'étendant suivant l'axe (14) en traversant partiellement ou complètement le stator (52), **en ce que** le stator (52) est fixé sur l'extérieur de la portée tubulaire (98 ; 99 ; 106), **en ce que** l'arbre moteur (90 ; 91 ; 108) s'étend à l'intérieur de la portée tubulaire (98 ; 99 ; 106) et **en ce que** la liaison à au moins un degré de liberté en rotation connecte l'intérieur de la portée tubulaire (98, 99 ; 106) et l'arbre moteur (90 ; 91 ; 108).

8. Dispositif selon l'une des revendications précédentes, **caractérisé en ce qu'**il comprend un corps monobloc (60) solidaire du stator (52), **en ce que** la liaison à au moins un degré de liberté en rotation selon l'axe (14) connecte le corps (60) et un arbre moteur (108) solidaire du rotor (20) et **en ce que** le piston (102) du compresseur (100) se déplace dans un cylindre (104) formé dans le corps (60).

9. Dispositif selon les revendications 7 et 8, **caractérisé en ce que** le corps monobloc (60) comprend la portée tubulaire (106).

10. Dispositif selon la revendication 9, **caractérisé en ce que** seule la liaison à au moins un degré de liberté en rotation selon l'axe (14) connecte le corps (60) et l'arbre moteur (108) et **en ce que** la liaison à au moins un degré de liberté en rotation selon l'axe (14) connecte sans intermédiaire le corps (60) et l'arbre moteur (108).

11. Dispositif selon l'une des revendications précédentes, **caractérisé en ce que** le rotor (20) est solidaire d'un arbre moteur (90 ; 91 ; 108) comprenant une portée (92 ; 93 ; 112) s'étendant le long de l'axe (14) et solidaire du vilebrequin (110), un segment de tube (114) à l'intérieur duquel est fixé le rotor (20) et un voile (116) reliant le segment de tube (114) et la portée (92 ; 93 ; 112).

12. Dispositif selon la revendication 11, **caractérisé en ce que** le moteur (50) est disposé entre le corps (60) et le voile (116).

13. Dispositif selon l'une des revendications précédentes, **caractérisé en ce que** la liaison cinématique à au moins un degré de liberté en rotation selon l'axe (14) comprend une liaison ou un ensemble de liaison parmi :
• Une liaison pivot (22 ; 46) ;
• Une liaison pivot glissant (24) ;
• Une liaison linéaire annulaire (26) et une liaison rotule (28) associées en parallèle ;
• Deux liaisons rotule (30, 32) associées en parallèle ;
• Une liaison rotule (34) et une liaison linéaire rectiligne (36) associées en parallèle ;
• Une liaison pivot glissant (38) et une liaison ponctuelle (40) associées en parallèle ;
• Une liaison linéaire annulaire (42) et une liaison appui plan (44) associées en parallèle.

## Patentansprüche

1. Kühlvorrichtung mit Stirling-Zyklus, umfassend einen Kompressor (100) mit einem hin- und hergehenden Kolben (102), der von einem rotierenden Elektromotor (10; 50) angetrieben wird, der sich über eine Kurbelwelle (110) um eine Achse (14) dreht, **dadurch gekennzeichnet, dass** der Elektromotor (10; 50) einen inneren Stator (12; 52) und einen äußeren Rotor (20) aufweist, und dadurch, dass der innere Stator (12; 52) mit der Kurbelwelle (110) über eine Verbindung mit mindestens einem Drehfreiheitsgrad (22; 24; 26, 28; 30, 32; 34, 36; 38, 40; 42, 44; 46) um die Achse (14) des Elektromotors (10; 50) verbunden ist.

2. Vorrichtung nach Anspruch 1, **dadurch gekennzeichnet, dass** der innere Stator (12) eine massive zylindrische Form hat, die sich entlang der Achse (14) des Elektromotors (10) erstreckt.

3. Vorrichtung nach Anspruch 1, **dadurch gekennzeichnet, dass** der Stator (52) eine zylindrische Form aufweist, die eine axiale Öffnung (53; 54) aufweist und sich entlang der Achse (14) erstreckt und in der sich eine mit dem äußeren Rotor (20) einstückige Motorwelle (90) drehen kann.

4. Vorrichtung nach Anspruch 3, **dadurch gekennzeichnet, dass** die axiale Öffnung (53; 54) den Stator (52) teilweise oder vollständig durchquert.

5. Vorrichtung nach Anspruch 4, **dadurch gekennzeichnet, dass** der äußere Rotor (20) einstückig mit einer Antriebswelle (90; 91; 108) ist, die von der Verbindung mit mindestens einem Drehfreiheitsgrad getragen wird, und dadurch, dass die Verbindung mit mindestens einem Drehfreiheitsgrad in zwei Teilen (26, 28; 30, 32; 34, 36; 38, 40; 42, 44) erfolgt, die jeweils auf einer Seite des Motors (50) entlang der Achse (14) angeordnet sind.

6. Vorrichtung nach Anspruch 5, **dadurch gekennzeichnet, dass** jeder der Teile durch ein Lager (80, 94) gebildet wird.

7. Vorrichtung nach einem der vorhergehenden Ansprüche, **dadurch gekennzeichnet, dass** ein Gehäuse (16) der Vorrichtung einen rohrförmigen Träger (98; 99; 106) aufweist, der sich entlang der Achse (14) erstreckt und den Stator (52) teilweise oder vollständig durchquert, dadurch, dass der Stator (52) an der Außenseite des rohrförmigen Trägers (98; 99; 106) befestigt ist; dadurch, dass die Motorwelle (90; 91; 108) sich im Inneren des rohrförmigen Halters (98; 99; 106) erstreckt, und dadurch, dass die Verbindung mit mindestens einem Drehfreiheitsgrad das Innere des rohrförmigen Trägers (98, 99; 106) und die Motorwelle (90; 91; 108) verbindet.

8. Vorrichtung nach einem der vorhergehenden Ansprüche, **dadurch gekennzeichnet, dass** sie einen einteiligen Körper (60) aufweist, der mit dem Stator (52) einstückig ist, dadurch, dass die Verbindung mit mindestens einem Drehfreiheitsgrad entlang der Achse (14) den Körper (60) und eine mit dem Rotor (20) einstückige Antriebswelle (108) verbindet, und dadurch, dass sich der Kolben (102) des Kompressors (100) in einem im Körper (60) gebildeten Zylinder (104) bewegt.

9. Vorrichtung nach einem der Ansprüche 7 und 8, **dadurch gekennzeichnet, dass** der einteilige Körper (60) den rohrförmigen Träger (106) umfasst.

10. Vorrichtung nach Anspruch 9, **dadurch gekennzeichnet, dass** nur die Verbindung mit mindestens einem Drehfreiheitsgrad um die Achse (14) den Körper (60) und die Antriebswelle (108) verbindet, und dadurch, dass die Verbindung mit mindestens einem Drehfreiheitsgrad um die Achse (14) den Körper (60) und die Antriebswelle (108) ohne Zwischenstück verbindet.

11. Vorrichtung nach einem der vorhergehenden Ansprüche, **dadurch gekennzeichnet, dass** der Rotor (20) fest mit einer Antriebswelle (90; 91; 108) verbunden ist, die einen sich entlang der Achse (14) erstreckenden und mit der Kurbelwelle (110) einstückige Träger (92; 93; 112), ein Rohrsegment (114), in dem der Rotor (20) befestigt ist, und einen das Rohrsegment (114) und den Träger (92; 93; 112) verbindenden Steg (116) aufweist.

12. Vorrichtung nach Anspruch 11, **dadurch gekennzeichnet, dass** der Motor (50) zwischen dem Körper (60) und dem Steg (116) angeordnet ist.

13. Vorrichtung nach einem der vorhergehenden Ansprüche, **dadurch gekennzeichnet, dass** die kinematische Verbindung mit mindestens einem Drehfreiheitsgrad um die Achse (14) eine Verbindung oder einen Verbindungssatz umfasst, darunter:
• eine Drehverbindung (22; 46);
• eine verschiebbare Drehverbindung (24);
• eine lineare ringförmige Verbindung (26) und eine Kugelgelenkverbindung (28), die parallel geschaltet sind;
• zwei parallel geschaltete Kugelgelenkverbindungen (30, 32);
• eine Kugelgelenkverbindung (34) und eine lineare geradlinige Verbindung (36), die parallel geschaltet sind;
• eine verschiebbare Drehverbindung (38) und eine Punktverbindung (40), die parallel geschaltet sind;
• eine ringförmige lineare Verbindung (42) und eine ebene Stützverbindung (44), die parallel geschaltet sind.

## Claims

1. A Stirling cycle cooling device comprising a compressor (100) with a reciprocating piston (102) driven by an electric motor (10; 50) rotating about an axis (14) via a crankshaft (110), **characterized in that** the electric motor (10; 50) comprises an internal stator (12; 52) and an external rotor (20) and **in that** the internal stator (12; 52) is connected to the crankshaft (110) via a link with at least one degree of freedom (22; 24; 26, 28; 30, 32; 34, 36; 38, 40; 42, 44; 46) in rotation about the axis (14) of the electric motor (10; 50).

2. The device according to claim 1, **characterized in that** the internal stator (12) has a solid cylindrical form extending along the axis (14) of the electric motor (10).

3. The device according to claim 1, **characterized in that** the stator (52) has a cylindrical form comprising an axial opening (53; 54) and extending along the axis (14) and wherein a drive shaft (90) integral with the external rotor (20) can turn.

4. The device according to claim 3, **characterized in that** the axial opening (53; 54) partially or completely traverses the stator (52).

5. The device according to claim 4, **characterized in that** the external rotor (20) is integral with a drive shaft (90; 91; 108) carried by the link with at least one degree of freedom in rotation and **in that** the link with at least one degree of freedom in rotation is produced in two parts (26, 28; 30, 32; 34, 36; 38, 40; 42, 44), each arranged on one side of the motor (50) along the axis (14).

6. The device according to claim 5, **characterized in that** each of the parts is formed by a bearing (80, 94).

7. The device according to one of the preceding claims, **characterized in that** a housing (16) of the device comprises a tubular bearing surface (98; 99; 106) extending along the axis (14), partially or completely traversing the stator (52), **in that** the stator (52) is fixed on the exterior of the tubular bearing surface (98; 99; 106), **in that** the drive shaft (90; 91; 108) extends inside the tubular bearing surface (98; 99; 106) and **in that** the link with at least one degree of freedom in rotation connects the interior of the tubular bearing surface (98, 99; 106) and the drive shaft (90; 91; 108).

8. The device according to one of the preceding claims, **characterized in that** it comprises a monoblock body (60) integral with the stator (52), **in that** the link with at least one degree of freedom in rotation about the axis (14) connects the body (60) and a drive shaft (108) integral with the rotor (20) and **in that** the piston (102) of the compressor (100) moves in a cylinder (104) formed in the body (60).

9. The device according to claims 7 and 8, **characterized in that** the monoblock body (60) comprises the tubular bearing surface (106).

10. The device according to claim 9, **characterized in that** only the link with at least one degree of freedom in rotation about the axis (14) connects the body (60) and the drive shaft (108) and **in that** the link with at least one degree of freedom in rotation about the axis (14) connects the body (60) and the drive shaft (108) directly.

11. The device according to one of the preceding claims, **characterized in that** the rotor (20) is integral with a drive shaft (90; 91; 108) comprising a bearing surface (92; 93; 112) extending along the axis (14) and integral with the crankshaft (110), a tube segment (114) inside which is fixed the rotor (20) and a web (116) connecting the tube segment (114) and the bearing surface (92; 93; 112).

12. The device according to claim 11, **characterized in that** the motor (50) is arranged between the body (60) and the web (116).

13. The device according to one of the preceding claims, **characterized in that** the kinematic link with at least one degree of freedom in rotation about the axis (14) comprises a link or a link assembly among:
• a pivot link (22; 46);
• a sliding pivot link (24);
• an annular linear link (26) and a ball link (28) associated in parallel;
• two ball links (30, 32) associated in parallel;
• a ball link (34) and a rectilinear linear link (36) associated in parallel;
• a sliding pivot link (38) and a punctiform link (40) associated in parallel;
• an annular linear link (42) and a planar bearing link (44) associated in parallel.
